(19) Europäisches Patentamt
European Patent Office
Office européen des brevets

(11) **EP 2 990 248 A2**

(12) **DEMANDE DE BREVET EUROPEEN**

(43) Date de publication:
02.03.2016 Bulletin 2016/09

(51) Int Cl.:
*B60K 6/10* (2006.01)      *B60K 6/12* (2006.01)
*B60K 6/445* (2007.10)      *B60K 6/365* (2007.10)

(21) Numéro de dépôt: 15182469.5

(22) Date de dépôt: 26.08.2015

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
MA

(30) Priorité: 28.08.2014 FR 1458094

(71) Demandeur: Valeo Systèmes de Contrôle Moteur
95892 Cergy Pontoise (FR)

(72) Inventeurs:
• ANGELOT, Pierre-Julian
78500 SARTROUVILLE (FR)
• KHELLAF, Yacine
95800 CERGY SAINT CHRISTOPHE (FR)

(74) Mandataire: Garcia, Christine
Propriété Intellectuelle
Valeo Systèmes de Contrôle Moteur
14, avenue des Béguines
95800 Cergy St Christophe (FR)

(54) **SYSTEME MECANIQUE D'AMPLIFICATION DE PUISSANCE**

(57) La présente invention concerne un système (1) mécanique d'amplification de puissance pour véhicule, comportant un train épicycloïdal (5) auquel sont connectés un volant d'inertie (2), une source de puissance (3) et des moyens de traction du véhicule (4), la connexion entre le volant et le train épicycloïdal (5) étant réalisée au niveau du planétaire du train épicycloïdal (5).

Fig.1

EP 2 990 248 A2

**Description**

La présente invention se rapporte au domaine de l'amplification de puissance, et plus particulièrement à un système mécanique d'amplification de puissance d'un systèmes de stockage d'énergie cinétique pour véhicules, notamment automobiles, camion, autocar, véhicules hors route.

Il est déjà connu des systèmes mécaniques de gestion de puissance comportant au moins un train épicycloïdal.

Par exemple, le brevet US4423794 décrit un système comportant un train épicycloïdal qui répartie la puissance entre un moteur électrique, un volant d'inertie, et un arbre moteur.

Le brevet FR2375465 décrit un système de stockage inertiel comportant deux trains épicycloïdaux qui dérivent la puissance à l'aide de deux machines électriques pour faire varier la vitesse de rotation du volant d'inertie.

Le brevet EP2387510 décrit un organe de transmission et de répartition de puissance possédant au moins trois entrées/sorties dont l'une est connectée à un volant d'inertie couplé également à une machine électrique ou fluidique, la seconde à la chaine de traction du véhicule, la troisième est connectée à un frein à friction.

Le brevet US7341534 décrit un système avec un train épicycloïdale dont l'une de ses trois entrées/sorties est connectée à une unité électrique de puissance; une seconde entrée/sortie est connectée à une entrée/sortie d'un autre train épicycloïdal dont l'une des entrées/sorties est bloquée, et une dernière entrée/sortie est connectée à un volant d'inertie.

Chacun de ces ses systèmes présente des inconvénients, soit notamment par un mode de connexion non optimisé, soit par la présence d'un second train épicycloïdale. Ainsi ces systèmes, bien que permettant le stockage d'énergie, ne permettent pas, de par leur configuration, d'avoir un fonctionnement optimisé sur de larges plages d'utilisation.

Il existe ainsi un besoin de perfectionner les systèmes mécaniques tels que connus aujourd'hui, en particulier dans le but d'optimiser les flux de puissance sur des plages d'utilisation plus grandes, de réduire les besoins énergétiques, d'augmenter le rendement et/ou réduire le coût global.

La présente invention a donc pour objet de pallier un ou plusieurs des inconvénients des systèmes de l'art antérieur en proposant un système mécanique d'amplification de puissance pour véhicule, comportant un train épicycloïdal auquel sont connectés un volant d'inertie, une source de puissance et des moyens de traction du véhicule , la connexion entre le volant et le train épicycloïdal étant réalisée au niveau du planétaire du train épicycloïdal.

Un tel système permet d'amplifier la puissance d'entrée sur une certaine plage d'utilisation plus importante.

Selon un mode de réalisation de l'invention, la connexion entre la source de puissance et le train épicycloïdal est réalisée au niveau de la couronne du train épicycloïdal.

Selon un mode de réalisation de l'invention, la connexion entre les moyens de tractions et le train épicycloïdal est réalisée au niveau du porte-satellites du train épicycloïdal.

Selon un mode de réalisation de l'invention, la source de puissance est un moteur thermique.

Selon un mode de réalisation de l'invention, la source de puissance est une machine électrique.

Selon un mode de réalisation de l'invention, la machine électrique est une machine électrique deux ou quatre quadrants.

Selon un mode de réalisation de l'invention, la source de puissance est une machine hydraulique.

Selon un mode de réalisation de l'invention, la source de puissance est alimentée par un moyen de stockage d'énergie dédié, partagé avec d'autres sources ou alimenté en direct par une autre source de puissance.

Selon un mode de réalisation de l'invention, le moyen de stockage est une batterie, des ultra-capacités, un ou plusieurs accumulateurs hydraulique/pneumatique, un réservoir de carburant.

L'invention concerne également un véhicule équipé d'un système selon l'invention.

D'autres buts, caractéristiques et avantages de l'invention seront mieux compris et apparaîtront plus clairement à la lecture de la description faite, ci-après, en se référant aux figures annexées, données à titre d'exemple et dans lesquelles:

- la figure 1 représente, de façon schématique, un exemple de système mécanique d'amplification de puissance selon l'invention,
- la figure 2 représente, de façon schématique, un exemple de train épicycloïdal utilisé dans le cadre de l'invention,
- les figures 3A à 3F représentent différentes configuration du système selon l'invention, et les flux de puissance associés,
- la figure 4 représente l'ouverture du système en fonction de l'ouverture du train épicycloïdal pour les différentes configurations du système,
- les figures 5A et 5B représentent le régime de rotation du volant en fonction de la vitesse du véhicule pour les différentes connexions possibles et pour deux ouvertures de train différentes (A et B).

La présente invention concerne un système d'amplification de puissance. Dans le cadre de l'invention l'élément d'amplification du système est un volant d'inertie.

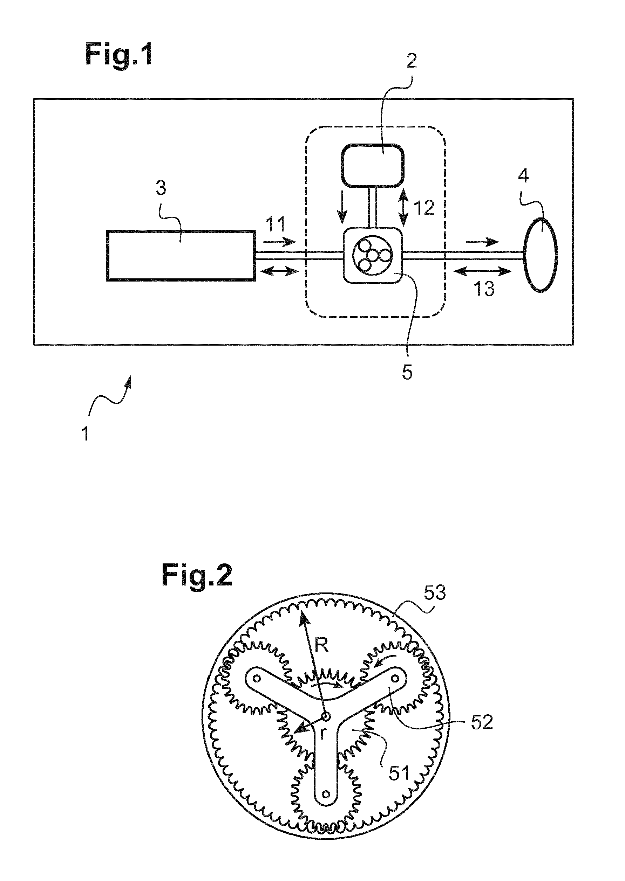

Comme illustré sur la figure 1, le système 1 concerné par la présente invention est ainsi formé par au moins trois éléments qui sont, un volant d'inertie 2, une source de puissance 3 et une chaîne de traction 4, les éléments étant couplés entre-eux.

Selon une première variante de l'invention, la source de puissance 3 est un moteur thermique.

Selon une autre variante de l'invention, la source de puissance 3 est une machine électrique. Selon un mode de réalisation de l'invention, la machine électrique est à deux ou quatre quadrants.

Selon une autre variante de l'invention, la source de puissance 3 est une machine hydraulique simple ou double effet, qui peut être réversible ou irréversible.

Selon un mode de réalisation de l'invention, la source de puissance 3 est alimentée par un moyen de stockage de puissance dédié, partagé avec d'autres sources de puissance ou alimenté en direct par une autre source de puissance.

Selon un mode de réalisation de l'invention, le moyen de stockage est une batterie, des ultra-capacités, un ou plusieurs accumulateurs hydraulique/pneumatique, un réservoir de carburant ou tout autre type de moyen de stockage d'énergie connus.

Les trois éléments 2, 3, 4 du système 1 selon l'invention, sont couplés entre eux par l'intermédiaire d'un moyen de couplage 5.

Dans le cadre de l'invention les moyens de couplage 5 sont formés par un train épicycloïdal 5 illustré figure 2. Ce train épicycloïdale 5 comporte un planétaire 51, un porte-satellites 52 et une couronne 53. La couronne 53 engrène avec les satellites 521, 522, 523 du porte-satellites 52, qui eux même engrènent avec le planétaire 51. Le train épicycloïdale 5 comporte trois entrées/sorties 12, 11, 13 respectivement vers le volant d'inertie 2, la source de puissance 3 et les moyens de tractions 4.

Avec ce système 1 selon l'invention, il est ainsi possible de connecter chacun des éléments 2, 3, 4 du système, à chacun des éléments du train épicycloïdal 5.

Plus précisément, il est possible de connecter l'élément d'amplification, c'est-à-dire le volant d'inertie 2 soit au planétaire 51, soit au porte-satellites 52, soit à la couronne 53 du train épicycloïdal 5.

Selon un mode de réalisation de l'invention, le volant d'inertie 2 est connecté au planétaire 51 du train épicycloïdal 5.

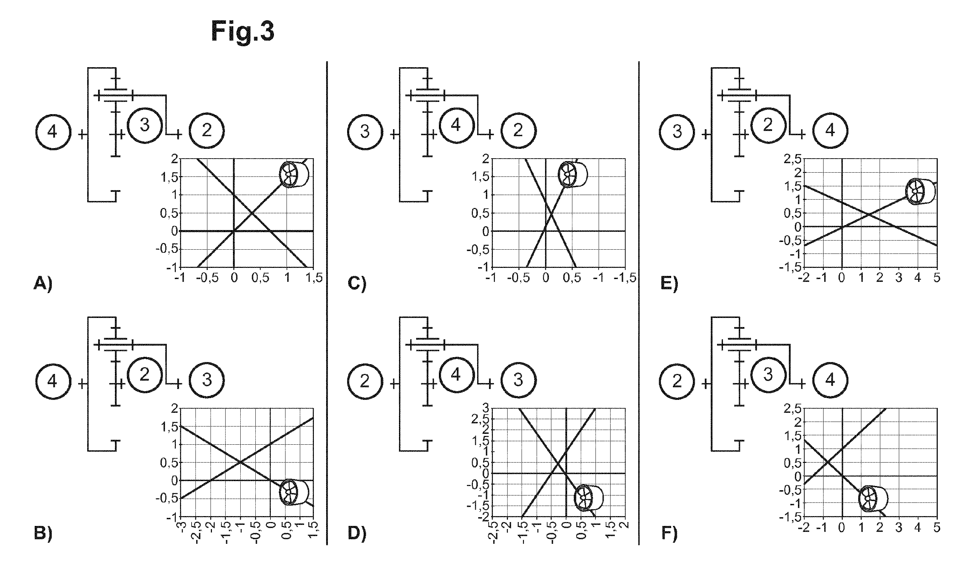

Comme cela est illustré dans les figures 3 à 5 décrites plus loin, une telle connexion permet d'amplifier la puissance sur une plus grande plage d'utilisation.

Selon un autre mode de réalisation de l'invention, le volant d'inertie 2 est connecté au planétaire 53, la sortie vers les moyens de traction 4 est connectée au porte-satellites 52 et la source de puissance 3 à la couronne 53.

Les figures 3 à 5 illustrant le choix des connexions permettant d'obtenir la plage d'utilisation la plus importante vont maintenant être décrite.

Les figures 3A à 3F, représentent différentes configurations de connexion, et les courbes du taux de puissance associées.

Dans le cadre de l'invention, l'ouverture du train épicycloïdal est définie par le nombre de connexions pertinentes pour définir le système. Plus précisément, l'ouverture est définie par les connexions entrée/sortie des différents éléments du train épicycloïdal avec le volant 2 et avec les moyens de tractions 4. Le train épicycloïdal tel que défini dans la présente invention comporte ainsi six ouvertures.

Plus précisément, pour illustrer les résultats, on utilise une nouvelle variable ($K_{epi}$), définie par $k_{epi} = (\omega)_{volant}/\omega_{sortie}$, avec $\omega_{volant}$ pour régime de rotation du volant et $\omega$ de la sortie vers les moyens de tractions.. Il devient alors possible de représenter en deux dimensions l'amplification de puissance obtenue par le volant :

$$\sigma_{volant} = -\frac{P_{volant}}{P_{out}}$$ avec $\sigma_{volant}$ pour le taux de puissance mécanique du volant, $P_{volant}$ la puissance du volant

et $P_{sortie}$ la puissance en sortie vers les moyens de tractions.

$$\sigma_{SP} = -\frac{P_{SP}}{P_{out}}$$ avec $\sigma_{SP}$ pour le taux de puissance mécanique de la source de puissance, $P_{SP}$ la puissance de la source de puissance et $P_{sortie}$ la puissance en sortie vers les moyens de tractions.

Par exemple, dans le cas où le volant d'inertie 2 est connecté au planétaire 51 du train épicycloïdal 5, la source de puissance à la couronne et la sortie au porte-satellite 52.

Les taux de puissance sont alors définis de la façon suivante :

•

$$\sigma_{volant} = \sigma_{sun} = -\frac{P_{sun}}{P_{carrier}} = -\frac{T_{sun}}{T_{carrier}} \cdot \frac{\omega_{sun}}{\omega_{carrier}} = \frac{1}{1-\lambda} \cdot k_{epi}$$

$$\sigma_{SP} = \sigma_{ring} = -\frac{P_{ring}}{P_{carrier}} = -\frac{T_{ring}}{T_{carrier}} \cdot \frac{\omega_{ring}}{\omega_{carrier}} = -\frac{\lambda}{1-\lambda}\left(\frac{1-\lambda}{-\lambda} \cdot \frac{\omega_{carrier}}{\omega_{carrier}} + \frac{1}{-\lambda} \cdot \frac{\omega_{sun}}{\omega_{carrier}}\right) =$$

$$1 - \frac{1}{1-\lambda} \cdot k_{epi}$$

Avec σ pour le taux de puissance mécanique planétaire, T le couple (pour Torque selon la terminologie anglaise), ω le régime de rotation et λ l'ouverture du train épicycloïdal 5.

Il est ainsi possible de tracer les différents taux d'amplification en fonction de l'ouverture du train épicycloïdal.

Sur la figure 3A, le volant d'inertie 2 est connecté au porte-satellites 52, la sortie vers les moyens de traction 4 à la couronne 53 et la source de puissance 3 au planétaire 51. Le coefficient d'amplification de puissance associé aux courbes obtenues est (λ-1)/λ.

Sur la figure 3B, le volant d'inertie 2 est connecté au planétaire 51, la sortie vers les moyens de traction 4 à la couronne 53 et la source de puissance 3 au porte-satellites 52. Le coefficient d'amplification de puissance associé aux courbes obtenues est 1/λ.

Sur la figure 3C, le volant d'inertie 2 est connecté au porte-satellites 52, la sortie vers les moyens de traction 4 au planétaire 51 et la source de puissance 3 à la couronne 53. Le coefficient d'amplification de puissance également appelé coefficient directeur associé aux courbes obtenues est 1- λ.

Sur la figure 3D, le volant d'inertie 2 est connecté à la couronne 53, la sortie vers les moyens de traction 4 au planétaire 51 et la source de puissance 3 au porte-satellites 52. Le coefficient d'amplification de puissance associé aux courbes obtenues est λ.

Sur la figure 3E, le volant d'inertie 2 est connecté au planétaire 51, la sortie vers les moyens de traction 4 au porte-satellites 52 et la source de puissance 3 à la couronne 53. Le coefficient d'amplification de puissance associé aux courbes obtenues est 1/(1- λ).

Sur la figure 3F, le volant d'inertie 2 est connecté à la couronne 53, la sortie vers les moyens de traction 4 au porte-satellites 52 et la source de puissance 3 au planétaire 51. Le coefficient d'amplification de puissance associé aux courbes obtenues est λ/(1- λ).

Ces résultats mettent en évidence le fait que le système permet donc d'amplifier la puissance d'entrée sur une certaine plage d'utilisation qui dépend du coefficient directeur de ces droites. En effet, plus le coefficient directeur est faible, plus la plage d'utilisation du dispositif est étalée et donc importante. De même, plus le coefficient directeur est faible, plus la plage d'amplification est importante.

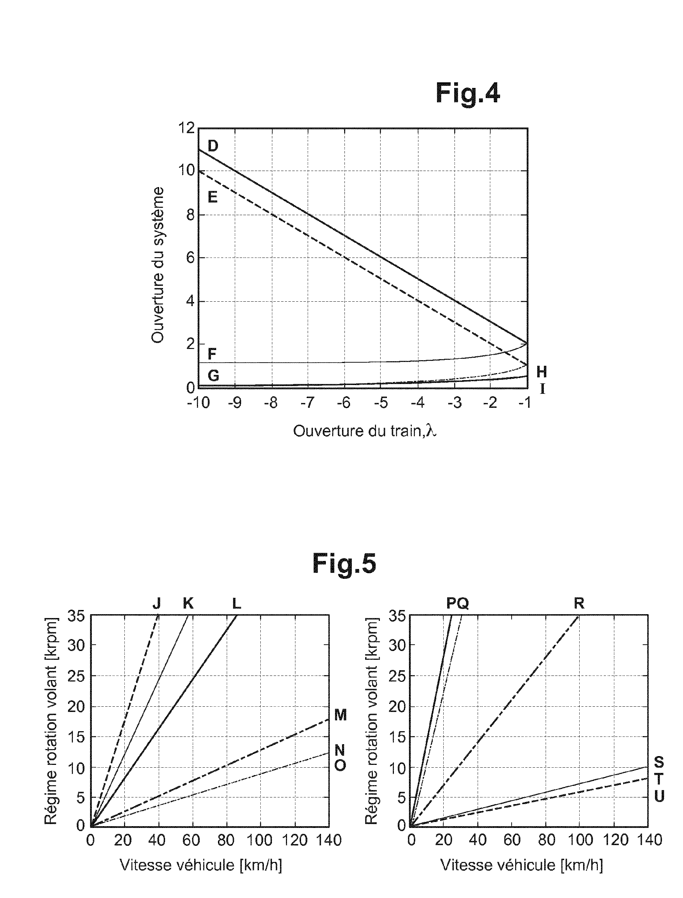

La figure 4 qui illustre l'ouverture du système en fonction de l'ouverture du train, met en évidence le fait que l'on obtient une meilleure plage d'amplification, c'est à dire plus grande, lorsque le volant d'inertie est connecté au planétaire 51.Sur cette figure, la courbe D concerne le cas où les moyens de tractions 4 sont connectés au porte satellites 52, le volant d'inertie 2 est connecté au planétaire 51 et la source de puissance est connectée à la couronne 53 ; la courbe E concerne le cas où les moyens de tractions 4 sont connectés à la couronne 53, le volant d'inertie 2 est connecté au planétaire 51 et la source de puissance est connectée au porte satellites 52 ; la courbe F concerne le cas où les moyens de tractions 4 sont connectés au porte satellites 52, le volant d'inertie 2 est connecté à la couronne 53 et la source de puissance est connectée au planétaire 51 ; la courbe G concerne le cas où les moyens de tractions 4 sont connectés au planétaire 51, le volant d'inertie 2 est connecté à la couronne 53 et la source de puissance est connectée au porte satellites 52; la courbe H concerne le cas où les moyens de tractions 4 sont connectés à la couronne 53 , le volant d'inertie 2 est connecté au porte satellites 52 et la source de puissance 3 est connectée au planétaire 51 ; la courbe I concerne le cas où les moyens de tractions 4 sont connectés au planétaire 51, le volant d'inertie 2 est connecté à la couronne 53 et la source de puissance est connectée au porte satellites 52.

Les figures 5A et 5B illustrent le régime de rotation du volant d'inertie en fonction de la vitesse du véhicule pour deux ouvertures différentes du train épicycloïdal 5 : A l'ouverture λ=2, et B l'ouverture λ=4. Ces figures mettent en évidence le fait que la meilleure plage d'utilisation est obtenue lorsque le volant d'inertie 2 est connecté au planétaire 53, mais également lorsque la sortie vers les moyens de traction 4 est connectée au porte-satellites 52 et la source de puissance 3 à la couronne 53. Sur la figure 4A, la courbe J concerne le cas où les moyens de tractions 4 sont connectés au porte satellites 52, le volant d'inertie 2 est connecté au planétaire 51 et la source de puissance est connectée à la couronne 53 ; la courbe K concerne le cas où les moyens de tractions 4 sont connectés à la couronne 53, le volant d'inertie 2 est connecté au planétaire 51 et la source de puissance est connectée au porte satellites 52 ; la courbe L concerne le cas où les moyens de tractions 4 sont connectés au porte satellites 52, le volant d'inertie 2 est connecté à la couronne 53 et la source de puissance est connectée au planétaire 51 ; la courbe M concerne le cas où les moyens de tractions 4 sont connectés au planétaire 51, le volant d'inertie 2 est connecté à la couronne 53 et la source de puissance est connectée au porte satellites 52 ; la courbe N concerne le cas où les moyens de tractions 4 sont connectés à la couronne 53 , le volant d'inertie 2 est connecté au porte satellites 52 et la source de puissance est connectée au planétaire 51 ; la courbe 0 concerne le cas où les moyens de tractions 4 sont connectés au planétaire 51, le volant d'inertie 2 est connecté à la couronne 53 et la source de puissance est connectée au porte satellites 52. Sur la figure 4B, la courbe P concerne le cas où les moyens de tractions 4 sont connectés au porte satellites 52, le volant d'inertie 2 est connecté au planétaire 51 et la source de puissance est connectée à la couronne 53 ; la courbe Q concerne le cas où les moyens de tractions 4 sont connectés à la couronne 53, le volant d'inertie 2 est connecté au planétaire 51 et la source de puissance est connectée au porte satellites 52 ; la courbe R concerne le cas où les moyens de tractions 4 sont connectés au porte satellites 52, le volant d'inertie 2 est connecté à la couronne 53 et la source de puissance est connectée au planétaire 51 ; la courbe S concerne le cas où les moyens de tractions 4 sont connectés au planétaire 51, le volant d'inertie 2 est connecté à la couronne 53 et la source de puissance est connectée au porte satellites 52 ; la courbe T concerne le cas où les moyens de tractions 4 sont connectés à la couronne 53 , le volant d'inertie 2 est connecté au porte satellites 52 et la source de puissance est connectée au planétaire 51 ; la courbe U concerne le cas où les moyens de tractions 4 sont connectés au planétaire 51, le volant d'inertie 2 est connecté à la couronne 53 et la source de puissance est connectée au porte satellites 52.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

**Revendications**

1. Système (1) mécanique d'amplification de puissance pour véhicule, comportant un train épicycloïdal (5) auquel sont connectés un volant d'inertie (2), une source de puissance (3) et des moyens de traction du véhicule (4), la connexion entre le volant et le train épicycloïdal (5) étant réalisée au niveau du planétaire (51) du train épicycloïdal (5), la source de puissance (3) étant une machine électrique deux ou quatre quadrants.

2. Système (1) selon la revendication 1, dans lequel la connexion entre la source de puissance (3) et le train épicycloïdal (5) est réalisée au niveau de la couronne (53) du train épicycloïdal (5).

3. Système (1) selon une des revendications 1 ou 2, dans lequel la connexion entre les moyens de tractions (4) et le train épicycloïdal (5) est réalisée au niveau du porte-satellites (52) du train épicycloïdal (5).

4. Système (1) selon une des revendications 1 à 3, dans lequel la source de puissance (3) est un moteur thermique.

5. Système (1) selon une des revendications 1 à 3, dans lequel la source de puissance (3) est une machine hydraulique.

6. Système (1) selon une des revendications 1 à 5, dans lequel la source de puissance est alimentée par un moyen de stockage d'énergie dédié, partagé avec d'autres sources ou alimenté en direct par une autre source de puissance.

7. Système (1) selon la revendication 6, dans lequel le moyen de stockage est une batterie, des ultra-capacités, un ou plusieurs accumulateurs hydraulique/pneumatique, un réservoir de carburant.
Véhicule équipé d'un système (1) selon l'une quelconque des revendications 1 à 7.

# Fig.1

# Fig.2

# Fig.3

A)

B)

C)

D)

E)

F)

EP 2 990 248 A2

# Fig.4

# Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4423794 A
- FR 2375465
- EP 2387510 A
- US 7341534 B